# EUROPÄISCHE PATENTSCHRIFT

(11) **EP 0 383 266 B1**
(45) Veröffentlichungstag und Bekanntmachung des Hinweises auf die Patenterteilung: **04.08.1993**
(21) Anmeldenummer: 90102807.6
(22) Anmeldetag: 13.02.1990
(51) Int. Cl.: A01K 97/24

(54) **Vorrichtung zum Lösen und Bergen von Angelhaken und/oder Ködern**
Device for releasing and retrieving fish-hooks and/or lures
Dispositif pour détacher et récupérer un hameçon et/ou un leurre de pêche

(30) Priorität: 14.02.1989 DE 3904414
(43) Veröffentlichungstag der Anmeldung: 22.08.1990
(73) Patentinhaber: Schultheis, Friedel, D-36381 Schlüchtern (DE)
(72) Erfinder: Schultheis, Friedel, D-36381 Schlüchtern (DE)
(74) Vertreter: Heim, Hans-Karl, Dipl.-Ing.

(56) Entgegenhaltungen:
- US-A- 2 479 448
- US-A- 2 760 810
- US-A- 2 915 845

## Beschreibung

Die Erfindung befaßt sich mit einem beim Angeln in stehenden oder fließenden Gewässern häufig auftretenden Problem, daß nämlich der an der Angelschnur befestigte Angelhaken oder Köder sich an einem unter Wasser befindlichen Hindernis verhakt und beim Versuch die Angel wieder frei zu ziehen der Angelhaken oder Köder von der Angelschnur abreißt und verloren geht.

Zum Lösen und Bergen solcher festsitzender, noch an der Angelschnur befindlicher Angelhaken und / oder Köder hat man bereits ringartige Vorrichtungen entwickelt, die eine Zugschnur aufweisen und die in Ihrer Arbeitsstellung die Angelschnur umgreifen und mit mindestens einem abstehenden Stift versehen sind, mit dem sich der Angelhaken oder Köder verhaken soll, um dann mit Hilfe der Zugschnur von dem Hindernis gelöst und wieder geborgen zu werden.

Eine solche Vorrichtung ist beispielsweise in der US-Patentschrift 4 467 547 beschrieben.

Bei dieser bekannten Vorrichtung sind aus der Ebene des Ringes herausragende Stifte vorgesehen, die indessen in der Praxis wenig Neigung zeigen sich mit dem Angelhaken zu verhaken, andererseits jedoch sowohl im Gewässer selbst als auch auf dem Lande eine außerordentliche Trittgefahr für Badende und auch für die Angler selbst darstellen.

Ausgehend von diesem bekannten Stande der Technik liegt der vorliegenden Erfindung die Aufgabe zugrunde, eine solche Vorrichtung zum Lösen und Bergen festsitzender, noch an einer Angelschnur befindlicher Angelhaken und / oder künstlicher Köder so zu verbessern, daß einerseits die Verhakungsneigung mit dem Angelhaken und / oder Köder weiter verbessert und zum anderen die Greif- und Trittsicherheit sowie die wirtschaftliche Herstellung derartiger Vorrichtungen wesentlich verbessert werden.

Gelöst wird diese erfindungsgemäße Aufgabe gemäß dem kennzeichnen den Teil des Anspruchs 1.

Zweckmäßigerweise sind auf der Innenseite des Ringes radial einwärts gerichtet etwa gleich beabstandete Stifte angeordnet. Da dieselben die Außenkontur des Ringes nicht übertreffen, besteht somit auch keinerlei Trittgefahr für Badende, wenn derartige Ringe im Gewässer selbst oder in Ufernähe verloren gehen.

Es hat sich als besonders zweckmäßig erwiesen, wenn die auf der Innenseite des Ringes radial einwärts gerichteten Stifte um einen Winkel von etwa 20° aus der Ringebene abgebogen sind. Eine solche Ausführungsform erweist sich in Bezug auf die Verhakungsmöglichkeit mit dem Angelhaken bzw. Köder als besonders vorteilhaft.

Eine weitere Verbesserung wird dadurch erreicht, daß die Stifte jeweils abwechselnd nach der einen Seite und nach der andern Seite aus der Ringebene abgebogen sind. Bei einer solchen Ausführungsform ist es gleichgültig in welcher Richtung die erfindungsgemäße Vorrichtung auf die Angelschnur aufgesetzt wird.

Die Stifte selbst können stumpf enden oder aber auch angespitzt sein. Als besonders vorteilhaft hat es sich erwiesen, wenn die Stifte um einen Winkel von etwa 60 angespitzt sind.

Für das Aufbringen auf die Angelschnur ist der Ring in an sich bekannter Weise zweckmäßig mit einem schräg verlaufenden Schlitz versehen, durch den die Angelschnur in den Ring eingeführt wird. Bei einer solchen Ausführungsform hat es sich als besonders zweckmäßig erwiesen, wenn die benachbart zum Schlitz angeordneten beiden Stifte mit ihren Enden aufeinanderzugebogen sind. Je geringer der Abstand zwischen den beiden Stiftenden ist, um so geringer ist die Wahrscheinlichkeit, daß die Angelleine zwischen diese beiden Stifte springt und dann durch den Schlitz den Ring verläßt.

Die erfindungsgemäße Vorrichtung wird zweckmäßig aus Stahl gefertigt und mit einer Korrosionsschutzschicht versehen. Als solche Korrosionsschutzschicht kann einerseits ein Chromüberzug Verwendung finden, andererseits kann auch eine Kunststoffbeschichtung oder ein Lacküberzug für die notwendige Korrosionsbeständigkeit sorgen.

Bei der erfindungsgemäßen Vorrichtung ist für die Befestigung der Zugschnur im Ring eine Bohrung angebracht, durch die das Ende der Zugschnur hindurchgeführt und mittels eines am Ende der Zugschnur angebrachten Knotens arretiert wird.

Die in der erfindungsgemäßen Vorrichtung verwendete Zugschnur hat zweckmäßig eine Zugfestigkeit von etwa 40 bis 50 Kg. Gegenüber der Zugfestigkeit einer normalen Angelschnur von 2 bis 6 Kg kann somit eine wesentlich größere Kraft zum Bergen des Angelhakens und / oder Köders aufgewandt werden.

An Hand der in den Zeichnungen dargestellten Ausführungsbeispiele wird nachfolgend die Erfindung im einzelnen näher erläutert.

In den Zeichnungen zeigt:
- Figur 1: einen Schnitt durch die Ringebene in Höhe der im Ring angebrachten Bohrungen für die Stifte;
- Figur 2: eine Draufsicht auf den Ring mit eingesetzten Stiften;
- Figur 3: einen Schnitt längs der Linie A-A in Figur 1;
- Figur 4: einen entsprechenden Schnitt längs der Linie B-B in Figur 2;
- Figur 5: eine Detaildarstellung eines Stiftes.

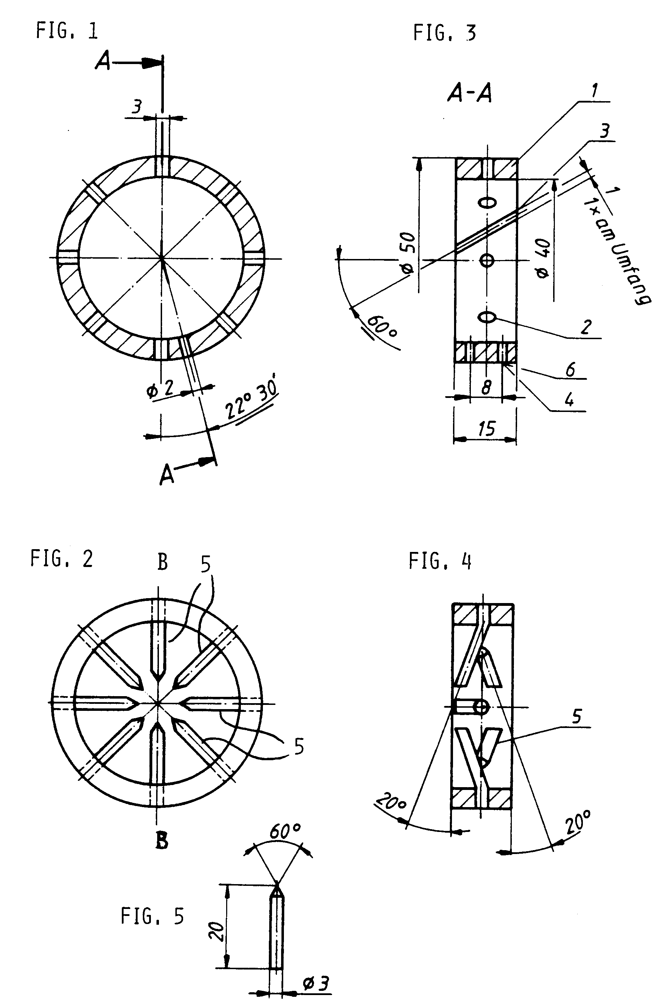

Der in Figur 1 gezeigte Ring ist mit acht Öffnungen für die Aufnahme von Stiften versehen, wobei diese Öffnungen einen Durchmesser von 3 mm aufweisen. Zusätzlich ist eine weitere Öffnung mit einem Durchmesser von 2 mm vorgesehen, in der die Zugschnur befestigt wird.

In Figur 2 ist die radial einwärts gerichtete Anordnung der Stifte 5 zu erkennen.

Die Schnittdarstellung entlang der Linie A-A in Figur 1 zeigt den im Ring vorgesehenen Schlitz, des das Aufsetzen des Ringes auf die Angelschnur ermöglicht. Darüberhinaus sind in dieser Figur auch der Außendurchmesser mit 50 mm und der Innendurchmesser des Ringes mit 40 mm angegeben.

Figur 4 zeigt die Anordnung der Stifte im Ring, bei der die Stifte abwechselnd um einen Winkel von etwa 20° aus der Ringebene abgebogen sind, ohne dabei indessen die Außenkontur des Ringes zu überschreiten.

Der in Figur 5 gezeigte Stift hat eine Länge von 20 mm und einen Durchmesser von 3 mm. Das freie Ende des Stiftes ist zugespitzt mit einem Winkel von 60° .

Die Wirkungsweise der erfindungsgemäßen Bergevorrichtung ist folgende:

Wenn sich der Angelhaken an einem Hindernis verfangen hat, spannt sich die Angelschnur.
Die erfindungsgemäße Vorrichtung wird mittels des im Ring vorgesehenen Schlitzes auf die Angelschnur aufgesetzt, die Schnur möglichst steil angeordnet, sodaß die Vorrichtung auf der Schnur zum Angelhaken gleitet.
Durch leichtes Anziehen der Zugschnur wird die Vorrichtung mit dem Angelhaken verhakt. Dann wird so lange an der Zugschnur gezogen bis sich der Angelhaken am Hindernis gelockert hat. Dies erkennt man daran, daß die Angelschnur nicht mehr gespannt ist.
Durch Einholen der Zugschnur wird die Vorrichtung mit dem daran befestigten Angelhaken geborgen.

## Patentansprüche

1. Vorrichtung zum Lösen und Bergen festsitzender, noch an einer Angelleine befindlicher Angelhaken (9) und/oder künstlicher Köder (8) aus fließenden und stehenden Gewässern,
mit einer Zugschnur (6), die an einem Ring (1) befestigt ist, der in seiner Arbeitsstellung die Angelleine (7) umgreift und mit abstehenden Stiften (5) versehen ist,
dadurch **gekennzeichnet**,
daß die Stifte (5) an der Innenseite des Rings (1) im wesentlichen radial einwärts gerichtet angebracht sind und den Ring (1) in axialer Richtung nirgends übertreffen.

2. Vorrichtung nach Anspruch 1,
dadurch **gekennzeichnet**,
daß die Stifte (5) gegenüber der Ringebene eine Neigung aufweisen.

3. Vorrichtung nach Anspruch 2,
dadurch **gekennzeichnet**,
daß die Stifte (5) abwechselnd nach der einen und nach der anderen Seite geneigt sind.

4. Vorrichtung nach einem der Ansprüche 2 oder 3, dadurch **gekennzeichnet**,
daß der Neigungswinkel der Stifte (5) gegenüber der Ringebene etwa 20 Grad beträgt.

5. Vorrichtung nach einem der vorhergehenden Ansprüche,
dadurch **gekennzeichnet**,
daß jeder Stift (5) aus einem geraden Kreiszylinder besteht, auf den eine kegelförmige Spitze aufgesetzt ist.

6. Vorrichtung nach einem der vorhergehenden Ansprüche,
dadurch **gekennzeichnet**,
daß der Ring (1) einen Schrägschlitz (3) zur Durchführung einer Angelleine aufweist.

## Claims

1. Device for releasing and salvaging caught fish-hooks (9) and/or flies (8) still attached to a fishing line from running and stagnant water, with a pull cord (6) fixed to a ring (1) and which in its working position engages round the fishing line (7) and which is provided with projecting pins (5), characterized in that the pins (5) are fitted to the inside of the ring (1) in substantially radially inwardly directed manner and axially nowhere surmount the ring (1).

2. Device according to claim 1, characterized in that the pins (5) have an inclination relative to the ring plane.

3. Device according to claim 2, characterized in that the pins (5) are alternately inclined to one and then the other side.

4. Device according to one of the claims 2 or 3, characterized in that the angle of inclination of the pins (5) is approximately 20° with respect to the ring plane.

5. Device according to one of the preceding claims, characterized in that each pin (5) comprises a straight circular cylinder on which is mounted a conical tip.

6. Device according to one of the preceding claims, characterized in that the ring (1) has a slanting slot (3) for the passage of a fishing line.

## Revendications

1. Dispositif pour détacher ou sauver des hameçons (9) se trouvant encore solidement fixés sur une ligne de pêche et/ou des appâts artificiels (8) en les sortant d'eaux courantes ou stagnantes avec une tirette (6), qui est fixée sur une bague (1) qui entoure, dans sa position de travail, la ligne d'hameçon (7) et est pourvue de tiges s'en écartant (5), dispositif caractérisé en ce que les tiges (5) sont disposées sur le côté intérieur de la bague (1) et orientées de façon essentiellement radiale vers l'intérieur et ne dépassent nulle part la bague (1) dans le sens axial.

2. Dispositif selon la revendication précédente, caractérisé en ce que les tiges (5) présente une inclinaison par rapport au plan de la bague.

3. Dispositif selon la revendication 2, caractérisé en ce que les tiges (5) sont inclinées alternativement vers l'un et vers l'autre côté.

4. Dispositif selon l'une des revendications 2 ou 3, caractérisé en ce que l'angle d'inclinaison des tiges (5) par rapport au plan de la bague atteint environ vingt degrés.

5. Dispositif selon l'une des revendications précédentes, caractérisé en ce que chaque tige (5) consiste en un cylindre droit à base circulaire, sur lequel est monté une pointe de forme conique.

6. Dispositif selon l'une des revendications précédentes, caractérisé en ce que la bague (1) présente une fente oblique (3) pour le passage d'une ligne d'hameçon.
